# FASCICULE DE BREVET EUROPEEN

(11) **EP 3 479 045 B1**
(45) Date de publication et mention de la délivrance du brevet: **01.04.2020**
(21) Numéro de dépôt: 17745389.1
(22) Date de dépôt: 23.06.2017
(51) Int. Cl.: F28D 15/02

(54) **PROCÉDÉ DE FABRICATION D'UN TUYAU DE CHALEUR**
VERFAHREN ZUR HERSTELLUNG EINES WÄRMEROHRS
METHOD FOR PRODUCING A HEAT PIPE

(30) Priorité: 29.06.2016 FR 1656089
(43) Date de publication de la demande: 08.05.2019
(73) Titulaire: Compagnie Générale des Etablissements Michelin, 63000 Clermont-Ferrand (FR)
(72) Inventeur: WALSER, Daniel, 63040 Clermont-Ferrand Cedex 9 (FR); FRAGNIERE, Bruno, 63040 Clermont-Ferrand Cedex 9 (FR)
(74) Mandataire: Noel, Luminita
(86) Numéro de dépôt international: PCT/FR2017/051677
(87) Numéro de publication internationale: WO 2018/002489

(56) Documents cités:
- WO-A1-2014/198778
- CN-A- 1 480 703
- US-A- 5 895 868
- US-A1- 2005 051 259
- US-A1- 2006 162 160
- US-A1- 2007 062 038
- US-A1- 2007 290 505

## Description

### DOMAINE DE L'INVENTION

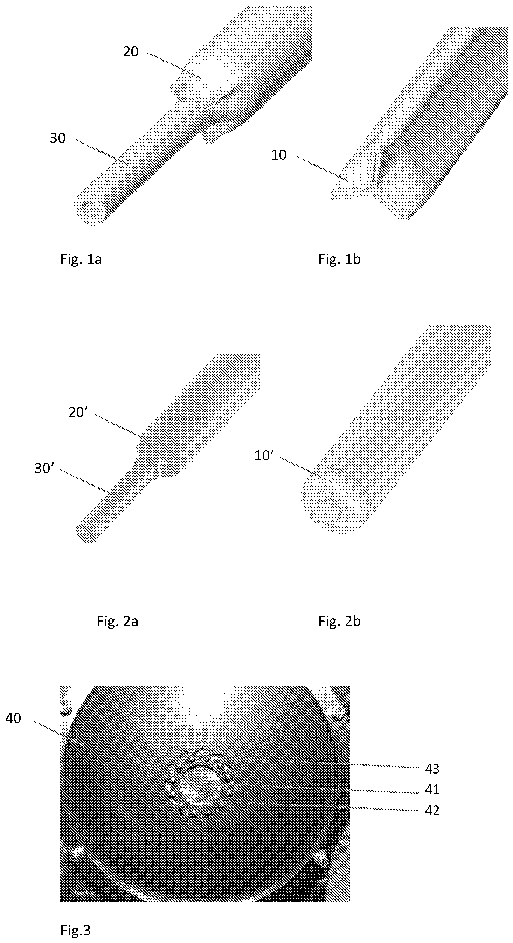

La présente invention se situe dans le domaine du refroidissement par tuyau de chaleur contenant un fluide caloporteur. De manière préférentielle, la présente invention concerne le domaine du refroidissement de batteries, notamment mais non exclusivement des batteries utilisées dans les véhicules ou des batteries stationnaires La présente invention concerne en particulier un procédé de fabrication d'un tuyau de chaleur. Le document US 2007/0062038A1, qui est considéré comme l'état de la technique le plus proche de l'objet de la revendication 1, divulgue un (voir figur 1) procédé de fabrication d'un tuyau de chaleur (10), comprenant les étapes suivantes, :• On rétreint le diamètre d'un premier tube réalisé en un matériau malléable à une première extrémité, et on réalise une fermeture étanche de l'extrémité ainsi rétreinte,• On remplit partiellement le tuyau ainsi créé avec un fluide caloporteur,• On enlève l'air contenu dans le tuyau, et• On rétreint la seconde extrémité du premier tube.

Avec le développement des véhicules électriques et des véhicules hybrides, la question des batteries est devenue majeure dans l'industrie automobile. Les batteries doivent désormais fournir une quantité suffisante d'énergie pour offrir une autonomie suffisante aux véhicules, tout en ayant une durée de vie ne nécessitant pas de changement de batterie. En outre, il est utile que les batteries puissent fonctionner correctement dans toutes les situations de roulage du véhicule, que ce soit en termes de température, d'humidité, ou autres.

Or, on sait qu'une température optimale de fonctionnement de telles batteries est généralement située entre 20°C et 35°C. Il est donc utile de prévoir un système de refroidissement performant pour éviter une surchauffe des batteries.

On connaît déjà de la demande PCT/EP2014/062136, un bloc batterie comportant un ensemble de cellules de batterie et au moins un dispositif de refroidissement. Le dispositif de refroidissement comprend une plaque de collecte de chaleur en contact avec une surface externe d'au moins une cellule de batterie, un tuyau de chaleur en contact avec la plaque de collecte de chaleur, et un élément de dissipation de chaleur. L'élément de dissipation de chaleur comporte un orifice circulaire dans lequel est positionné le tuyau de chaleur cylindrique.

Le principe du dispositif de refroidissement est le suivant : chaque tuyau de chaleur, également appelé caloduc, renferme un fluide, qui se vaporise au niveau des cellules de batterie, sous l'effet de la chaleur émise lors du fonctionnement de la batterie. La vapeur ainsi formée remplit alors le caloduc jusqu'au début de l'élément de dissipation, à savoir jusqu'à l'entrée du dispositif de dissipation la plus proche des cellules de batterie. Lorsque la vapeur se trouve dans la partie des tuyaux de chaleur positionnée dans l'élément de dissipation, l'air atmosphérique circulant dans cet élément de dissipation permet de refroidir le fluide jusqu'à ce qu'il retourne en phase liquide et retombe vers les cellules de batterie.

Le terme cellule de batterie utilisé ici est équivalent au terme accumulateur électrique, ou élément de batterie. Les cellules de batterie sont, dans un exemple, de forme cylindrique. Toutefois, l'invention s'applique à des cellules de batterie de toute forme, et de toute puissance.

On connaît également, de la demande US 2009/0208829, un bloc batterie mettant en œuvre des caloducs parallélépipédiques. Toutefois, on a constaté que l'utilisation de tels caloducs amenait une complexité et une masse supplémentaire car pour éviter que les deux faces opposées du parallélépipède ne se touchent lorsqu'une dépression est créée dans le caloduc, il faut utiliser des matériaux plus rigides ou des architectures conférant la rigidité cherchée et donc souvent plus lourds.

L'objectif de la présente invention est donc de fournir des caloducs permettant de remédier à cet inconvénient de l'art antérieur, tout en offrant des bonnes performances de refroidissement. De manière plus précise, la présente invention vise à fournir un procédé de fabrication de tels caloducs.

### BREVE DESCRIPTION DE L'INVENTION

Ainsi, l'invention concerne un procédé de fabrication d'un tuyau de chaleur, comprenant les étapes suivantes, effectuées sur un premier tube réalisé en un matériau malléable:
- On rétreint le diamètre du tube à une première extrémité, et on réalise une fermeture étanche de l'extrémité ainsi rétreinte,
- A la seconde extrémité du premier tube, on insère un second tube en un matériau malléable, de diamètre inférieur au premier,
- On rétreint la seconde extrémité du premier tube autour du second tube, et on rend étanche l'interface entre les deux tubes,
- On remplit partiellement le tuyau ainsi créé avec un fluide caloporteur, par exemple avec une quantité de fluide de l'ordre de 1 millilitre,
- On enlève l'air contenu dans le tuyau, et
- On réalise une fermeture étanche de l'extrémité libre du second tube.

Dans la suite de la description, on utilisera le terme « tube » pour désigner les éléments cylindriques de base mis en œuvre dans le procédé de fabrication. Les termes « tuyau de chaleur » ou « caloduc » seront utilisés indifféremment pour désigner l'assemblage des tubes.

Dans un mode de réalisation préférentiel, le matériau malléable est un matériau à grande conductivité thermique, par exemple du cuivre recuit, c'est-à-dire du cuivre qui a été chauffé après durcissement, ce qui le rend plus malléable. Pour obtenir les meilleures performances, il est utile que l'extrémité du tuyau de chaleur, siège de l'évaporation, soit constituée d'un matériau à grande conductivité thermique. En revanche, la partie centrale du tuyau de chaleur peut être constituée d'un autre matériau, puisqu'elle sert uniquement à permettre la circulation du fluide. Ainsi, dans un mode de réalisation, seule l'extrémité du tuyau de chaleur est réalisée en un matériau à grande conductivité. Toutefois, l'utilisation d'un tuyau de chaleur réalisé en un unique matériau permet de réduire les coûts et de simplifier le procédé de fabrication.

On précise ici que, dans un procédé selon l'invention, les étapes de rétreint et les étapes ultérieures sont effectuées température ambiante sur du cuivre recuit, qui est plus malléable que du cuivre non recuit.

Dans un mode de réalisation préférentiel, les tubes mis en œuvre dans le procédé de fabrication sont rainurés sur leur surface interne sous forme hélicoïdale.

Pour un bon fonctionnement des caloducs, il est nécessaire que le fluide, après avoir retrouvé la phase liquide, se déplace jusqu'au niveau des éléments à refroidir. Dans le cas où le module batterie est en position sensiblement verticale, la gravité permet ce déplacement, puisque le fluide en phase liquide est plus lourd qu'en phase gazeuse. On constate alors que, lors d'un fonctionnement de la batterie dans une position autre que la position verticale, le fonctionnement s'en trouve dégradé, puisque la gravité n'agit plus dans une direction parallèle à l'orientation des tuyaux de chaleur, et ne permet donc plus un déplacement du fluide aussi efficace. Pour remédier à cela, plusieurs solutions sont envisageables. Ainsi, dans une réalisation préférentielle, les tubes de chaleur sont rainurés sur leur surface interne, de manière à augmenter la surface de condensation, ceci afin d'augmenter les échanges thermiques. Dans une autre configuration, il est utile d'installer, à l'intérieur des tuyaux de chaleur, des moyens permettant le déplacement de fluide par capillarité, par exemple un treillis.

Dans un mode de réalisation préférentiel, la fermeture étanche de la première extrémité du premier tube est effectuée par brasure.

Dans un mode de réalisation préférentiel, la fermeture étanche de l'extrémité libre du second tube comprend les étapes suivantes :
- On écrase la partie du second tube située à l'extérieur du premier tube jusqu'à étanchéité,
- On coupe le second tube au niveau de la partie écrasée.

En outre, afin de sécuriser l'étanchéité, et notamment sur le long terme, l'étape de fermeture étanche de l'extrémité libre du second tube comprend, dans une réalisation avantageuse, une ultime étape au cours de laquelle on soude la nouvelle extrémité libre du second tube. Dans ce cas, l'étape d'écrasement permet de réaliser une étanchéité temporaire, le temps d'effectuer cette étape de soudure.

Deux solutions sont envisagées, dans un procédé selon l'invention, pour effectuer les rétreints. Ainsi, dans un premier mode de réalisation, les rétreints sont effectués avec un mandrin à trois ou quatre mors, ce qui permet d'obtenir un rétreint en étoile. Dans un second mode de réalisation, les rétreints sont effectués avec un outil de rétreint en forme de diaphragme, ce qui permet d'obtenir un rétreint en anneau, avec une forme parfaitement régulière sur toute la circonférence.

Le rétreint en étoile est particulièrement avantageux pour les tubes de grands diamètres qui seraient difficiles à rétreindre autrement. L'utilisation du rétreint en anneau facilite le procédé de fabrication, puisque la brasure permettant de rendre étanche l'interface entre les deux tubes est plus facile sur une surface circulaire que sur une surface dentelée obtenue par le rétreint en étoile.

Ainsi que précédemment mentionné, un procédé de fabrication selon l'invention comprend une étape au cours de laquelle on enlève l'air présent dans le tuyau. Là encore, plusieurs solutions sont envisagées dans l'invention. Ainsi, une première solution consiste à brancher une pompe à vide sur l'extrémité libre du second tube, et à aspirer l'air jusqu'à l'obtention d'une pression partielle de l'air dans le tube comprise entre 0 et 70 mbar. On précise ici que la pompe à vide devra être correctement choisie pour permettre d'atteindre ces niveaux de pressions.

Une deuxième solution, qui permet d'éviter l'utilisation d'une pompe à vide, consiste à chauffer l'extrémité fermée du premier tube jusqu'à ébullition du fluide caloporteur. Dans ce cas, le fluide caloporteur se vaporise, et le gaz ainsi formé crée une surpression dans le caloduc, chassant ainsi l'air hors du caloduc. Cette solution peut toutefois s'avérer difficile à mettre en œuvre, car elle nécessite une maîtrise fine de la durée d'ébullition, afin de garantir qu'il reste, à l'issue de cette étape d'évacuation de l'air, une quantité suffisante de fluide caloporteur dans le caloduc pour permettre un fonctionnement correct du caloduc lors de son installation dans un système à refroidir.

L'invention concerne également un tuyau de chaleur obtenu par un procédé de fabrication selon l'invention, et un bloc batterie comprenant au moins un tel tuyau de chaleur.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- les figures 1a et 1b montrent les extrémités d'un tuyau de chaleur fabriqué selon un mode de réalisation d'un procédé selon l'invention, en mettant en œuvre un rétreint étoile,
- les figures 2a et 2b montrent les extrémités d'un tuyau de chaleur fabriqué selon un mode de réalisation d'un procédé selon l'invention, en mettant en œuvre un rétreint anneau, et
- la figure 3 montre un outil mis en œuvre dans un mode de réalisation particulier d'un procédé selon l'invention.

### DESCRIPTION DU MEILLEUR MODE DE REALISATION DE L'INVENTION

Ainsi que précédemment décrit, un tuyau de chaleur fabriqué par un procédé selon l'invention comporte deux tubes assemblés pour former le tuyau. Le tuyau ainsi formé comporte deux extrémités, une première qu'on pourrait appeler « banale », et une seconde extrémité que l'on qualifiera de « composée », puisqu'elle comprend le second tube inséré dans le premier tube.

Nous allons ci-après décrire un mode de réalisation particulier de la présente invention. Le premier tube, qui apparaît sur les figures 1 et 2, comporte une première extrémité 10, 10', et une seconde extrémité 20, 20'. Un second tube 30, 30' est inséré dans cette seconde extrémité 20, 20'.

Le premier tube est préférentiellement en cuivre recuit. Il a un diamètre de l'ordre de 10 millimètres et une longueur de quelques centimètres. Le second tube est également préférentiellement en cuivre recuit, et présente un diamètre de 4 millimètres. On précise également que la paroi du second tube doit être suffisamment épaisse, par exemple de l'ordre de 1 millimètre, pour ne pas être détériorée au cours de l'étape d'écrasement. Elle doit également présenter une rigidité suffisante pour rester en place après écrasement, afin d'éviter une réouverture du tube, ce qui pourrait conduire à des problèmes d'étanchéité du tuyau.

Du côté banal, un rétreint total doit être fait, pour permettre ensuite une brasure assurant l'étanchéité du tuyau. Du côté composé, le rétreint est effectué autour du second tube. Ainsi que précédemment décrit, on envisage plusieurs solutions pour effectuer ce rétreint. Ainsi, dans un premier mode de réalisation, montré aux figures 1a et 1b, on utilise un mandrin à trois ou quatre mors pour effectuer le rétreint, ce qui donne une forme de rétreint en étoile. Comme visible sur les figures la et 1b, on peut par exemple utiliser un mandrin à trois mors, tel que montré en figure 1b pour le côté banal, et un mandrin à quatre mors ou d'autres types de mandrin. Cette solution peut être avantageuse pour des tubes de grand diamètre, mais elle rend plus complexe les opérations ultérieures de réalisation de l'étanchéité, par exemple par brasure ou soudure, puisque la forme à souder est complexe.

Dans le cas où les caloducs sont destinés à être installés dans un bloc batterie, le nombre de mors du mandrin utilisé sera par exemple choisi en fonction de l'architecture souhaitée, et notamment du nombre de cellules de batterie que l'on souhaite installer autour de chaque caloduc.

La seconde solution, montrée en figures 2a et 2b, est d'effectuer un rétreint en forme d'anneau. De manière avantageuse, on utilisera pour cela un outil à rétreindre tel que montré en figure 3. Le rétreint en forme d'anneau facilite l'industrialisation d'un procédé de fabrication selon l'invention, puisque les opérations d'étanchéité, effectuées par exemple par soudure, sont facilitées, et sont répétables plus facilement sur des grandes séries.

L'outil à rétreindre montré en figure 3 est réalisé sur le même principe de fonctionnement qu'un diaphragme d'ouverture tel qu'utilisé dans le domaine de la photographie. Ainsi, cet outil comprend un disque extérieur 40, présentant une ouverture circulaire 41 en son centre. Au sein de cette ouverture circulaire sont installées des languettes 42 et un anneau d'activation 43. Les languettes sont solidaires, en une de leurs extrémités, de l'anneau d'activation 43. Une rotation de l'anneau 43 entraîne un déplacement des languettes pour atteindre une position où l'orifice 41 est réduit.

Ainsi, si l'on insère un tube dans l'orifice 41 et qu'on l'on active l'anneau, la pression exercée par les languettes sur le tube conduit à un rétreint circulaire de la forme du tube. Cette géométrie de languette permet d'obtenir un rétreint régulier sur toute la circonférence du tube. Le choix du nombre et de la taille des languettes sera effectué judicieusement pour permettre un rétreint total du tube sans endommager la paroi du tube.

Une fois les rétreints effectués, le second tube inséré dans le premier tube et les étapes de brasure et/ou soudure effectuées, un procédé selon l'invention comprend l'étape de remplir le tuyau ainsi créé avec un fluide caloporteur, et d'enlever ensuite l'air contenu dans le tuyau.

## Revendications

1. Procédé de fabrication d'un tuyau de chaleur, comprenant les étapes suivantes, effectuées sur un premier tube réalisé en un matériau malléable :
• On rétreint le diamètre du tube à une première extrémité (10, 10'), et on réalise une fermeture étanche de l'extrémité ainsi rétreinte,
• A la seconde extrémité du premier tube (20, 20'), on insère un second tube (30, 30') de diamètre inférieur au premier,
• On rétreint la seconde extrémité du premier tube autour du second tube, et on rend étanche l'interface entre les deux tubes,
• On remplit partiellement le tuyau ainsi créé avec un fluide caloporteur,
• On enlève l'air contenu dans le tuyau, et
• On réalise une fermeture étanche de l'extrémité libre du second tube.

2. Procédé de fabrication selon la revendication 1, dans lequel le premier tube est réalisé en un matériau à grande conductivité thermique.

3. Procédé de fabrication selon la revendication 1 ou 2, dans lequel la fermeture étanche de la première extrémité du premier tube est effectuée par brasure.

4. Procédé de fabrication selon l'une des revendications précédentes, dans lequel la fermeture étanche de l'extrémité libre du second tube comprend les étapes suivantes :
- On écrase la partie du second tube située à l'extérieur du premier tube jusqu'à étanchéité, et
- On coupe le second tube au niveau de la partie écrasée.

5. Procédé de fabrication selon la revendication 4, dans lequel la fermeture étanche de l'extrémité libre du second tube comprend en outre une ultime étape au cours de laquelle on soude la nouvelle extrémité libre du second tube pour renforcer l'étanchéité.

6. Procédé de fabrication selon l'une des revendications précédentes, dans lequel les rétreints sont effectués avec un mandrin à trois ou quatre mors.

7. Procédé de fabrication selon l'une des revendications précédentes, dans lequel les rétreints sont effectués avec un outil de rétreint en forme de diaphragme.

8. Procédé de fabrication selon l'une des revendications précédentes dans lequel l'étape d'enlever l'air présent dans le tuyau est effectuée en branchant une pompe à vide sur l'extrémité libre du second tube, et en aspirant l'air jusqu'à l'obtention d'une pression partielle de l'air dans le tube comprise entre 0 et 70 mbar.

9. Procédé de fabrication selon l'une des revendications 1 à 8, dans lequel l'étape d'enlever l'air présent dans le tuyau est effectuée en chauffant l'extrémité fermée du premier tube jusqu'à ébullition du fluide caloporteur.

10. Tuyau de chaleur obtenu par un procédé de fabrication selon l'une des revendications précédentes, **caractérisé en ce que** le premier et le second tube sont réalisés en cuivre recuit.

11. Tuyau de chaleur selon la revendication 10, ou obtenu par un procédé de fabrication selon l'une des revendications 1 à 8, dans lequel les tubes sont rainurés sur leur surface interne en forme hélicoïdale.

12. Bloc batterie comprenant au moins un tuyau de chaleur selon la revendication 10 ou 11.

## Patentansprüche

1. Verfahren zur Herstellung eines Wärmerohrs, das die folgenden Schritte enthält, die an einem aus einem formbaren Material hergestellten ersten Rohr ausgeführt werden:
• der Durchmesser des Rohrs wird an einem ersten Ende (10, 10') reduziert, und es wird ein dichter Verschluss des so reduzierten Endes durchgeführt,
• am zweiten Ende des ersten Rohrs (20, 20') wird ein zweites Rohr (30, 30') mit einem geringeren Durchmesser als das erste eingeführt,
• das zweite Ende des ersten Rohrs wird um das zweite Rohr herum reduziert, und die Schnittstelle zwischen den zwei Rohren wird abgedichtet,
• das so erzeugte Rohr wird teilweise mit einem Wärmeträgerfluid gefüllt,
• die im Rohr enthaltene Luft wird entfernt, und
• es wird ein dichter Verschluss des freien Endes des zweiten Rohrs durchgeführt.

2. Herstellungsverfahren nach Anspruch 1, wobei das erste Rohr aus einem Material mit großer Wärmeleitfähigkeit hergestellt wird.

3. Herstellungsverfahren nach Anspruch 1 oder 2, wobei das dichte Verschließen des ersten Endes des ersten Rohrs durch Löten erfolgt.

4. Herstellungsverfahren nach einem der vorhergehenden Ansprüche, wobei das dichte Verschließen des freien Endes des zweiten Rohrs die folgenden Schritte enthält:
- der außerhalb des ersten Rohrs befindliche Teil des zweiten Rohrs wird bis zur Dichtheit gequetscht, und
- das zweite Rohr wird im Bereich des gequetschten Teils geschnitten.

5. Herstellungsverfahren nach Anspruch 4, wobei das dichte Verschließen des freien Endes des zweiten Rohrs außerdem einen letzten Schritt enthält, während dessen das neue freie Ende des zweiten Rohrs geschweißt wird, um die Dichtheit zu verstärken.

6. Herstellungsverfahren nach einem der vorhergehenden Ansprüche, wobei die Reduzierungen mit einem Spannfutter mit drei oder vier Backen ausgeführt werden.

7. Herstellungsverfahren nach einem der vorhergehenden Ansprüche, wobei die Reduzierungen mit einem Reduzierungswerkzeug in Form einer Membran ausgeführt werden.

8. Herstellungsverfahren nach einem der vorhergehenden Ansprüche, wobei der Schritt des Entfernens der im Rohr vorhandenen Luft ausgeführt wird, indem eine Vakuumpumpe an das freie Ende des zweiten Rohrs angeschlossen wird, und indem die Luft angesaugt wird, bis ein Teildruck der Luft im Rohr zwischen 0 und 70 mbar erhalten wird.

9. Herstellungsverfahren nach einem der Ansprüche 1 bis 8, wobei der Schritt des Entfernens der im Rohr vorhandenen Luft ausgeführt wird, indem das geschlossene Ende des ersten Rohrs bis zum Sieden des Wärmeträgerfluids erwärmt wird.

10. Wärmerohr, das durch ein Herstellungsverfahren nach einem der vorhergehenden Ansprüche erhalten wird, **dadurch gekennzeichnet, dass** das erste und das zweite Rohr aus geglühtem Kupfer hergestellt werden.

11. Wärmerohr nach Anspruch 10, oder durch ein Herstellungsverfahren nach einem der Ansprüche 1 bis 8 erhalten, wobei die Rohre an ihrer Innenfläche schraubenförmig gerillt sind.

12. Batterieblock, der mindestens ein Wärmerohr nach Anspruch 10 oder 11 enthält.

## Claims

1. Method for producing a heat pipe, comprising the following steps, performed on a first tube made from a malleable material:
• The diameter of the tube is swaged at a first end (10, 10'), and the end thus swaged is sealed closed,
• A second tube (30, 30'), of a smaller diameter than the first, is inserted into the second end of the first tube (20, 20'),
• The second end of the first tube is swaged around the second tube and the interface between the two tubes is sealed,
• The pipe thus created is partially filled with a heat-transfer fluid,
• The air contained in the pipe is removed, and
• The free end of the second tube is sealed closed.

2. Production method according to Claim 1, in which the first tube is made of a material with high thermal conductivity.

3. Production method according to Claim 1 or 2, in which the sealed closure of the first end of the first tube is achieved by brazing.

4. Production method according to one of the preceding claims, in which the sealed closure of the free end of the second tube comprises the following steps:
- The part of the second tube which is situated on the outside of the first tube is crushed until it seals, and
- The second tube is cut at the crushed part.

5. Production method according to Claim 4, in which sealing the free end of the second tube closed further comprises a final step during which the new free end of the second tube is welded, to strenghten the sealing.

6. Production method according to one of the preceding claims, in which the swagings are performed using a three-jaw or four-jaw chuck.

7. Production method according to one of the preceding claims, in which the swagings are performed using a shutter-shaped swaging tool.

8. Production method according to one of the preceding claims, in which the step of removing the air present in the pipe is performed by connecting a vacuum pump to the free end of the second tube and sucking out the air until a partial air pressure of between 0 and 70 mbar is obtained in the tube.

9. Production method according to one of Claims 1 to 8, in which the step of removing the air present in the pipe is performed by heating the closed end of the first tube until the heat-transfer fluid boils.

10. Heat pipe obtained by a production method according to one of the preceding claims, **characterized in that** the first and the second tubes are made of annealed copper.

11. Heat pipe according to Claim 10, or obtained by a production method according to one of Claims 1 to 8, in which the tubes are helicoidally grooved on their internal surface.

12. Battery unit comprising at least one heat pipe according to Claim 10 or 11.
